# DEMANDE DE BREVET EUROPEEN

(11) **EP 2 030 505 A1**
(43) Date de publication de la demande: **04.03.2009**
(21) Numéro de dépôt: 06300837.9
(22) Date de dépôt: 28.07.2006
(51) Int. Cl.: A01K 1/035

(54) **Dispositif d'extraction et de filtration de gaz pour caisse animalière**

(30) Priorité: 18.08.2005 FR 0552532
(71) Demandeur: AOCHAM, 69120 Vaulx en Velin (FR)
(72) Inventeur: Peyrelong, René, 69003, Lyon (FR)
(74) Mandataire: Palix, Stéphane

(57) **Abrégé**

Dispositif (1) d'extraction et de filtration des gaz contenus à l'intérieur d'une caisse (2) apte à accueillir et/ou à transporter un animal, le dispositif (1) étant rapporté au niveau d'une paroi (3) de la caisse (2) dans une zone comportant des orifices d'aération permettant le passage des gaz de l'intérieur vers l'extérieur du volume défini par la caisse (2), et comportant un filtre apte à filtrer les gaz contenu dans la caisse (2) et une coque destinée à supporter un ventilateur pour générer un flux d'air et extraire les gaz de la caisse (2).

Selon l'invention, le filtre est agencé au contact, d'une part, de la caisse (2) et, d'autre part, de la coque en venant épouser la forme de la surface extérieure de la paroi (3).

## Description

### Domaine technique

La présente invention se rapporte au domaine des dispositifs permettant d'assurer la ventilation et l'élimination des odeurs contenues à l'intérieur d'une caisse pour animal. Une telle caisse est en effet apte à recevoir de la litière pour recueillir les excréments de l'animal vivant en appartement ou dans tout autre un lieu fermé. Ce type de caisse peut également être utilisé pour le transport d'animaux.

L'invention vise également l'ensemble formé par une caisse équipée d'un tel dispositif d'extraction et de filtration des gaz.

### Art antérieur

De façon générale, les dispositifs d'extraction et de filtration des gaz aptes à être rapportés sur une caisse pour animal comportent un élément filtrant et un ventilateur pour assurer la formation d'un flux d'air de l'intérieur de la caisse vers l'extérieur.

Le document US-A-5 778 822 décrit ainsi un appareil pour extraire et filtrer les gaz contenus à l'intérieur d'une caisse pour animal. Un tel dispositif comporte un logement apte à recevoir une cartouche filtrante rigide. La coque de cet appareil présente également une structure rigide non déformable avec une base directement au contact de la caisse et de géométrie plane.

Un tel appareil ne peut donc être rapporté que sur une caisse présentant une surface de contact totalement plane.

Par ailleurs, son mode de positionnement sur la caisse est réalisé au moyen de deux ailes orientées perpendiculairement par rapport au plan de contact entre le dispositif et la caisse et pénétrant à l'intérieur de deux fentes. Par conséquent, un tel appareil ne peut être rapporté que sur une caisse pour animal initialement prévue pour recevoir cet appareil et ne peut être adapté à une caisse pré-existante.

Ainsi, le but de l'invention est de permettre l'extraction et la filtration des gaz contenus dans une caisse pour animal en s'adaptant à toutes les géométries particulières des caisses.

Un autre objectif de l'invention est de permettre d'adapter ce dispositif sur des caisses non prévues initialement pour recevoir un tel dispositif.

On connaît également des dispositifs de filtration, notamment tels décrits dans le document DE 44 28 846, lesquelles sont mis en place dans un manchon agencé dans une ouverture circulaire de la paroi supérieure de la caisse. Ce type de dispositif nécessite donc de réaliser une ouverture avec de faibles tolérances géométrique lorsque ce dispositif de filtration est agencé sur une caisse pré-existante. En effet, lorsque l'ouverture n'est pas parfaitement circulaire, des fuites de gaz non filtré peuvent apparaître et le maintien en position du dispositif sur la caisse peut se révéler délicat.

Ainsi, un autre objectif de l'invention est de faciliter la mise en place du dispositif sur une caisse pré-existante en limitant les contraintes dimensionnelles sur les opérations d'évidement de la paroi extérieure de la caisse permettant le maintien en position du dispositif sur la caisse.

### Exposé de l'invention

L'invention concerne donc un dispositif d'extraction et de filtration des gaz contenus à l'intérieur d'une caisse apte à accueillir et/ou à transporter un animal. Un tel dispositif est rapporté au niveau d'une paroi de la caisse, dans une zone comportant des orifices d'aération permettant le passage des gaz de l'intérieur vers l'extérieur du volume défini par la caisse. Ce dispositif comporte un filtre apte à filtrer les gaz contenus dans la caisse et une coque destinée à supporter un ventilateur pour générer un flux d'air et extraire les gaz de la caisse.

Il se caractérise en ce que le filtre est agencé au contact, d'une part, de la caisse et, d'autre part, de la coque en venant épouser la forme de la surface extérieure de la paroi.

Autrement dit, un tel dispositif d'extraction peut être rapporté sur une paroi de caisse présentant une certaine courbure ou des motifs en relief. Il n'est donc pas nécessaire que la paroi soit totalement plane et lisse pour permettre au dispositif d'extraction d'assurer sa fonction.

Ainsi, le filtre est agencé en contact surfacique avec, à la fois, une portion de la caisse et la coque du dispositif. Ce contact surfacique sensiblement plan peut néanmoins présenter une courbure de manière épouser une forme gauche de la surface extérieure de la caisse.

Par ailleurs, la géométrie du filtre peut être modifiée pour s'adapter à la paroi et le filtre peut, lorsque celui-ci se trouve en regard d'un motif de la paroi, comporter des zones de densité différente par rapport au reste de sa structure. En effet, les motifs en reliefs peuvent générer une force de compression qui peut écraser localement le filtre.

Selon un mode de réalisation particulier, la coque peut comporter une nervure apte à comprimer localement le filtre contre la paroi de la caisse selon une bande définissant sensiblement un contour fermé agencé à la périphérie des orifices d'aération.

En effet, la nervure permet de générer une force de compression très localisée sur le filtre de manière à limiter la réaction du filtre sur la coque tout en garantissant une étanchéité entre la coque et la paroi extérieure de la caisse. De cette manière, d'une part, l'air extrait de la caisse ne peut s'échapper du dispositif de filtrage sans avoir été préalablement filtré, et d'autre part, l'air aspiré par le ventilateur provient intégralement du volume intérieur défini par la caisse.

Avantageusement, la coque peut être solidarisée de manière réversible avec la paroi de la caisse.

En d'autres termes, on réalise une liaison d'encastrement réversible entre le dispositif et la caisse. Le dispositif peut alors être rapporté sur l'une quelconque des parois de la caisse quelque soit son orientation. Il peut également être très rapidement désolidarisé pour permettre le nettoyage à grande eau de la caisse.

En pratique, le dispositif d'extraction et de filtration peut comporter des moyens de centrage aptes à assurer le positionnement précis de la coque par rapport aux orifices d'aération de la caisse.

Ainsi, le dispositif peut être solidarisé et désolidarisé de la caisse à volonté, son repositionnement étant réalisé par l'intermédiaire des moyens de centrage.

Selon un mode de réalisation particulier, la coque peut comporter deux moyens de centrage de manière à éliminer tous les degrés de liberté de mouvement du dispositif tout en limitant les contraintes de fabrication quant à la précision de la mesure des entraxes entre les moyens de centrage.

Ces moyens de centrage peuvent être formés par des excroissances émergeant de la coque et coopérant avec la paroi de la caisse. Ces excroissances peuvent ainsi être de forme cylindrique et au moins l'une d'entre-elles peut être munie de méplats de façon à compenser des différences d'entraxe entre, d'une part, les excroissances et, d'autre part, des orifices ménagés dans la paroi.

En effet, les moyens de centrage peuvent être formés par des excroissances émergeant de la coque et pénétrant à l'intérieur de logements fermés de forme complémentaire rapportés sur la paroi de la caisse destinée à accueillir le dispositif.

En d'autres termes, on réalise des perçages au niveau de la paroi sur laquelle doit être solidarisé le dispositif, puis on introduit, à l'intérieur de ces perçages, ces logements fermés cylindriques qui peuvent notamment se présenter sous la forme de "passe-fils" réalisés dans un matériau sensiblement déformable. Ainsi, lors de l'introduction de ces excroissances à l'intérieur de ces logements, ces derniers sont déformés et leur diamètre est agrandi. Les logements fermés permettent ainsi de réaliser le coincement des excroissances. Dans ce cas, les moyens de centrage jouent aussi le rôle des moyens de solidarisation réversibles du dispositif par rapport à la caisse.

Selon une seconde variante, les moyens de centrage peuvent également être formés par des excroissances émergeant de la coque et coopérant avec des ouvertures de forme complémentaire ménagées dans la paroi de la caisse.

Autrement dit, les excroissances peuvent traverser la paroi et comporter des moyens d'immobilisation anti-retour pour éviter leur sortie en sens opposé.

De tels moyens anti-retour peuvent être obtenus par divers modes de réalisation.

Selon un premier mode de réalisation, au moins une excroissance peut coopérer avec une rondelle déformable apte à réaliser la solidarisation réversible entre la paroi de la caisse et le dispositif. Ainsi, le joint torique est comprimé lors de l'introduction à l'intérieur de l'ouverture puis reprend sa forme initiale une fois passé de l'autre côté de la paroi, empêchant ainsi le mouvement en sens inverse.

Selon un deuxième mode de réalisation, au moins une excroissance peut comporter une géométrie déformable. Dans ce cas, elle peut comporter une pluralité d'ailettes ou de collerettes aptes à se déformer pour passer à travers l'ouverture et à reprendre leurs positions initiales une fois arrivées du côté interne de la caisse.

Selon un troisième mode de réalisation, il est également possible d'utiliser une excroissance de diamètre plus important que celui du perçage réalisé dans la caisse, l'excroissance peut être fendue de manière à permettre sa déformation élastique et son coincement au niveau de l'ouverture.

Bien entendu, les moyens de centrage peuvent également être formés par des excroissances émergeant de la caisse et coopérant avec la coque du dispositif. Ainsi, la coque présente dans ce cas des logements ou ouvertures permettant de réaliser à la fois un positionnement précis de la coque sur la caisse et la solidarisation réversible.

Avantageusement, la coque peut être réalisée dans un matériau flexible apte à épouser la forme de la paroi de la caisse. Ainsi, la coque permet de comprimer uniformément le filtre contre la paroi de la caisse et permet de suivre la courbure de la caisse.

En pratique, le dispositif peut comporter un élément anti-vibratoire apte à solidariser le ventilateur avec la coque.

Ainsi, l'élément anti-vibratoire permet à la fois de réduire le bruit de fonctionnement du dispositif et ses éventuelles vibrations, mais également il permet de solidariser le ventilateur avec la coque. Cette solidarisation est obtenue en comprimant l'élément anti-vibratoire en générant une force de rappel élastique qui permet de maintenir le ventilateur en position.

Avantageusement, le dispositif peut comporter un joint d'étanchéité destiné à être agencé à la fois au contact de la coque et de la paroi à la périphérie du filtre.

De cette manière, on s'assure que la totalité des gaz émergeant de la caisse, au travers des orifices d'aération, sont bien filtrés avant d'être évacués dans le milieu extérieur. De plus, l'étanchéité entre la coque et la caisse permet d'améliorer l'efficacité de l'aspiration.

L'invention concerne également une caisse apte à accueillir et/ou à transporter un animal comportant un dispositif d'extraction et de filtration tel que précédemment décrit.

En effet, le dispositif peut être un élément indépendant réalisant ainsi un accessoire que l'on peut adapter sur une caisse pré-existante. Il peut être également fourni avec une caisse spécifique ou non lors de l'achat de celle-ci.

### Description sommaire des figures

La manière de réaliser l'invention ainsi que les avantages qui en découlent, ressortiront bien de la description du mode de réalisation qui suit, donné à titre indicatif et non limitatif, à l'appui des figures annexées dans lesquelles :
La figure 1 est une vue schématique en perspective d'une caisse comportant un dispositif, conforme à l'invention.
La figure 2 est une vue schématique en coupe du dispositif, conformément à l'invention.
La figure 3 est une vue schématique de dessus du dispositif.
La figure 4 est une vue schématique de profil du dispositif.
Les figures 5 à 7 représentent différentes variantes de moyens de solidarisation entre le dispositif et la caisse.

### Manière de réaliser l'invention

Comme déjà évoqué, l'invention concerne un dispositif d'extraction et de filtration des gaz contenus à l'intérieur d'une caisse pour animal (2).

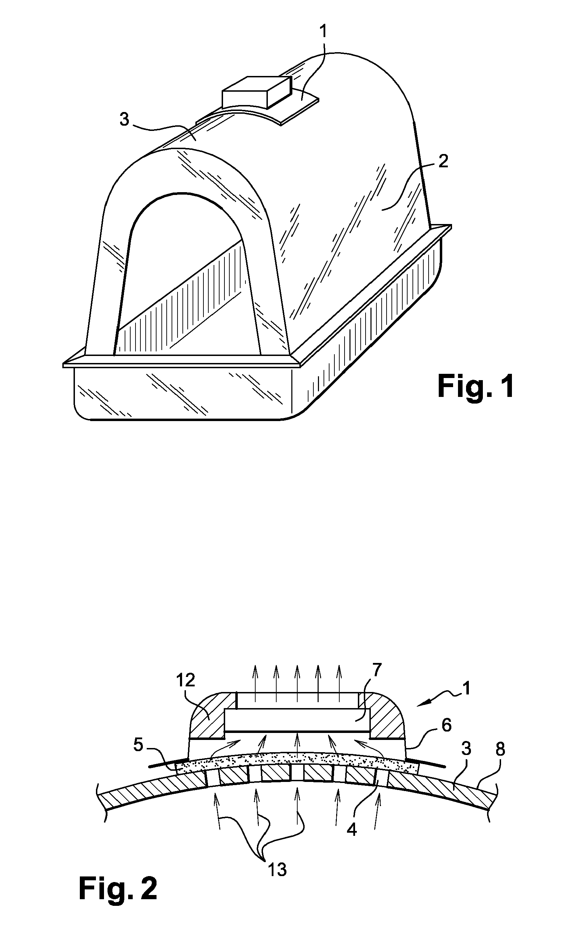

Tel que représenté à la figure 1, la caisse (2) peut présenter une forme quelconque et notamment comporter une paroi (3), sur laquelle le dispositif d'extraction et de filtration (1) est rapporté, présentant une courbure prononcée.

Tel que représenté à la figure 2, le dispositif (1) est agencé au contact de la surface externe (8) de la paroi (3) en regard d'une pluralité d'orifices d'aération (4).

Les gaz contenus à l'intérieur de la caisse (2) circulent vers l'extérieur selon les flèches (13).

Le dispositif (1) comporte un ventilateur (7) apte à générer le flux d'air permettant d'extraire les gaz situés à l'intérieur de la caisse (2). L'alimentation du ventilateur peut être réalisée au moyen d'un courant électrique basse tension de valeur 4,5 ou 6 Volts de façon à permettre l'extraction des gaz en toute sécurité pour les animaux et avec un bruit de fonctionnement minimum.

Cependant pour certaines applications et lorsque le volume sonore environnement est important, la tension de se courant peut être augmentée pour améliorer l'efficacité du ventilateur (7). Un tel environnement peut notamment être celui d'une animalerie ou d'un refuge pour animal.

Ce dispositif (1) comporte un filtre (5) apte à filtrer les gaz avant qu'ils ne soient rejetés à l'extérieur de la caisse (2). Un tel filtre peut notamment être du type à charbon actif.

Le dispositif (1) comporte également une coque (6) au contact du filtre (5). Cette coque (6) permet de plaquer le filtre (5) contre la paroi (3), évitant ainsi d'éventuelles fuites de gaz non filtrés à l'extérieur de la caisse (2).

Cette coque (6) peut comporter une ouverture dans laquelle est insérée une borne de connexion permettant à un câble d'alimentation d'être connecté ou non au dispositif (1). Notamment, la borne de connexion peut se présenter sous la forme d'une prise "jack femelle". De cette manière, les opérations de branchement ou de débranchement sont réalisées de manière très rapide.

Avantageusement, un transformateur de courant (non représenté) est situé à l'extérieur du dispositif (1) et permet de convertir la tension du secteur en une tension inférieure pour alimenter le ventilateur (7).

Selon d'autres variantes, le dispositif (1) peut également comporter une source électrique autonome. On peut notamment utiliser un accumulateur rechargeable ou des cellules photo voltaïques aptes à convertir l'énergie solaire en énergie électrique.

Tel que représenté, le ventilateur (7) est solidarisé avec la coque (6) au moyen d'un élément anti-vibratoire (12). Cet élément peut consister en un ruban de mousse enroulé autour du ventilateur (7) et permettant de réaliser le coincement du ventilateur (7) dans un logement de la coque (6). L'utilisation d'une borne de connexion pour le câble d'alimentation permet alors de faciliter le démontage du ventilateur (7) de la coque (6) et/ou le changement de l'élément anti-vibratoire (12).

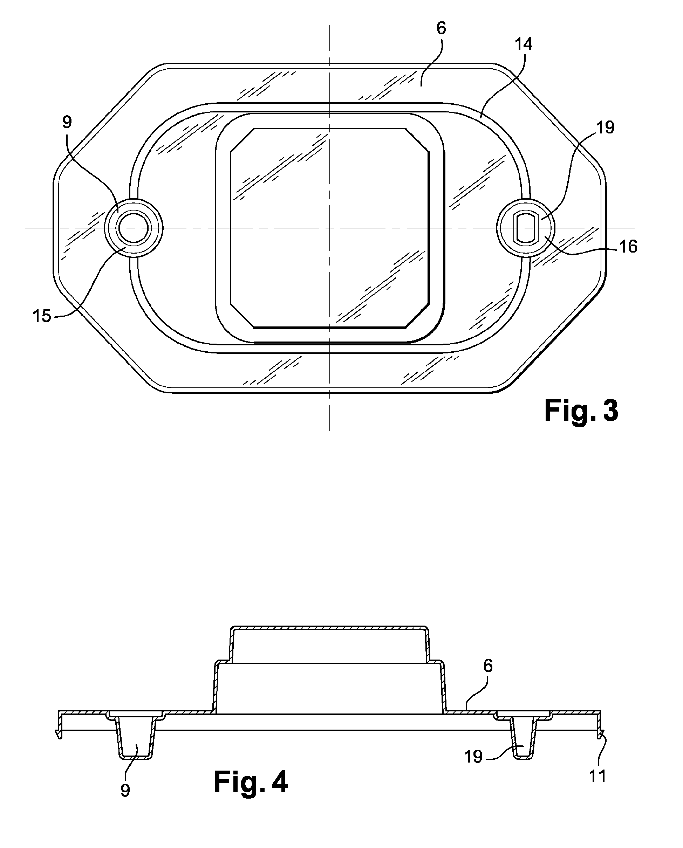

Tel que représenté à la figure 3, la coque (6) peut comporter une forme polygonale et comporter deux excroissances (9, 19) aptes à réaliser à la fois le positionnement et la solidarisation de la coque (6) avec la caisse animale.

Par ailleurs une nervure (14) permet de comprimer le filtre (7) au contact de la paroi extérieure (8) de la caisse (3). Ainsi, selon un premier mode de réalisation, la nervure (14) peut décrire un contour sensiblement fermé lorsque celui-ci correspond avec des bossages (15, 16) de même hauteur agencés à la périphérie des deux excroissances (9, 19).

Selon un second mode de réalisation, les deux excroissances (9, 19) peuvent ne pas couper la nervure et être agencés à l'intérieur ou à l'extérieur du le contour fermé défini par la nervure.

Tel que représenté à la figure 4, ces excroissances (9, 19) peuvent présenter une géométrie cylindrique, voire tronconique. Une des excroissances (19) peut être munie de méplats afin de faciliter le montage en autorisant une certaine tolérance d'entraxe entre les deux excroissances.

Tel que représenté, le dispositif peut également comporter un joint d'étanchéité (11) agencé en périphérie de la coque (6) et permettant d'éviter la sortie de gaz non filtrés à l'extérieur de la caisse.

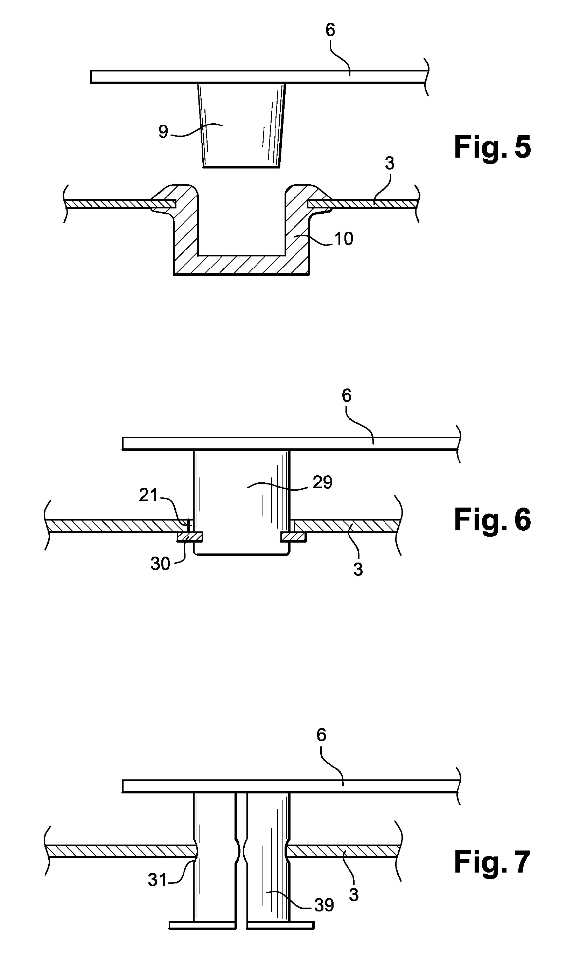

Tel que représenté à la figure 5, la coque (6) peut être munie d'une excroissance (9) sensiblement cylindrique et pénétrant à l'intérieur d'un logement fermé (10) rapporté sur la paroi (3). Ainsi, un perçage de la paroi (3) est réalisé, puis le logement fermé est introduit et solidarisé à la paroi (3) à l'intérieur de ce perçage. Le logement fermé (10) peut se présenter sous la forme d'un "passe-fils" en matériau sensiblement élastique apte à assurer le coincement de l'excroissance (9) lors de son introduction.

De cette manière, les moyens de centrage permettent à la fois d'assurer le positionnement précis du dispositif sur la caisse, mais également leur solidarisation réversible par une liaison encastrement.

Tel que représenté aux figures 6 et 7, d'autres variantes peuvent être utilisées pour réaliser les moyens de centrage.

Tel que représenté à la figure 6, l'excroissance (29) peut présenter une rondelle déformable (30). De cette manière, l'excroissance (29) introduite à l'intérieur d'une ouverture (21), on positionne par l'intérieur de la caisse cette rondelle déformable (30) sur l'extrémité de l'excroissance (29). Ainsi lors de sa mise en position, la rondelle déformable (30) s'écarte, puis s'immobilise sur l'excroissance grâce à une force de rappel élastique.

Cette variante permet de réaliser la fonction d'anti-retour, mais d'autres modes de réalisation peuvent être utilisés, par exemple au moyen de collerettes déformables comme évoqué ci-dessus.

Tel que représenté à la figure 7, on peut également prévoir une excroissance (39) se présentant sous la forme d'un plot fendu apte à se déformer élastiquement pour pénétrer à l'intérieur de l'ouverture (31) et réaliser le coincement par déformation élastique.

Il ressort de ce qui précède qu'un dispositif d'extraction et de filtration conforme à l'invention présente de multiples avantages, notamment :
- il permet de s'adapter à tout type de caisse présentant une forme quelconque,
- il traite l'ensemble des gaz évacués par les orifices d'aération grâce à un assemblage étanche avec la caisse,
- il permet un montage rapide et simple sans nécessiter d'outil,
- il peut être vendu comme accessoire pour être rapporté ultérieurement sur une caisse ou être vendu directement avec une caisse pour animal
- il garantit une extraction et une filtration des gaz en toute sécurité pour l'animal ou l'utilisateur,
- sa désolidarisation rapide permet un nettoyage aisé de la caisse et le faible nombre de composants le constituant facilite son entretien.

## Revendications

1. Dispositif (1) d'extraction et de filtration des gaz contenus à l'intérieur d'une caisse (2) apte à accueillir et/ou à transporter un animal, ledit dispositif (1) étant rapporté au niveau d'une paroi (3) de la caisse (2) dans une zone comportant des orifices d'aération (4) permettant le passage des gaz de l'intérieur vers l'extérieur du volume défini par la caisse (2), et comportant un filtre (5) apte à filtrer les gaz contenu dans la caisse (2) et une coque (6) destinée à supporter un ventilateur (7) pour générer un flux d'air et extraire les gaz de la caisse (2), **caractérisé en ce que** le filtre (5) est agencé au contact, d'une part, de la caisse (2) et, d'autre part, de la coque (6) en venant épouser la forme de la surface extérieure (8) de la paroi (3).

2. Dispositif d'extraction et de filtration selon la revendication 1, **caractérisé en ce que** la coque (6) comporte une nervure (14) apte à comprimer localement le filtre (5) contre la paroi (3) de la caisse (2) selon une bande définissant sensiblement un contour fermé agencé à la périphérie des orifices d'aération (4).

3. Dispositif d'extraction et de filtration selon la revendication 1, **caractérisé en ce que** la coque (6) est solidarisée de manière réversible avec la paroi (3) de la caisse (2).

4. Dispositif d'extraction et de filtration selon la revendication 1, **caractérisé en ce qu'**il comporte des moyens de centrage (9, 19, 29, 39) aptes à assurer le positionnement précis de la coque (6) par rapport aux orifices d'aération (4) de la caisse (2).

5. Dispositif d'extraction et de filtration selon la revendication 4, **caractérisé en ce que** la coque (6) comporte au moins une excroissance cylindrique munie de méplats.

6. Dispositif d'extraction et de filtration selon la revendication 4, **caractérisé en ce que** les moyens de centrage sont formés par des excroissances (9, 19) émergeant de la coque et pénétrant à l'intérieur de logements fermés (10) de forme complémentaire rapportés sur la paroi (3) de la caisse (2).

7. Dispositif d'extraction et de filtration selon la revendication 4, **caractérisé en ce que** les moyens de centrage sont formés par des excroissances (29, 39) émergeant de la coque (6) et coopérant avec des ouvertures (21, 31) de forme complémentaire ménagées dans la paroi (3) de la caisse (2).

8. Dispositif d'extraction et de filtration selon la revendication 7, **caractérisé en ce qu'**au moins une excroissance (29) coopère avec une rondelle déformable (30) apte à réaliser la solidarisation réversible entre la paroi (3) de la caisse (2) et le dispositif (1).

9. Dispositif d'extraction et de filtration selon la revendication 7, **caractérisé en ce qu'**au moins une excroissance (39) comporte une géométrie déformable.

10. Dispositif d'extraction et de filtration selon la revendication 1, **caractérisé en ce que** la coque (6) est réalisée dans un matériau flexible apte à épouser la forme de la paroi (3) de la caisse (2).

11. Dispositif d'extraction et de filtration selon la revendication 1, **caractérisé en ce qu'**il comporte un élément anti-vibratoire (12) apte à solidariser le ventilateur (7) avec la coque (6).

12. Dispositif d'extraction et de filtration selon la revendication 1, **caractérisé en ce qu'**il comporte un joint d'étanchéité (11) destiné à être agencé à la fois au contact de la coque (6) et de la paroi (3) à la périphérie du filtre (5).

13. Caisse apte à accueillir et/ou à transporter un animal **caractérisée en ce qu'**elle comporte un dispositif d'extraction et de filtration selon l'une des revendications précédentes.
